# EUROPEAN PATENT APPLICATION

(11) **EP 3 892 435 A1**
(43) Date of publication of application: **13.10.2021**
(21) Application number: 21167270.4
(22) Date of filing: 07.04.2021
(51) Int. Cl.: B29C 33/00, B29C 33/30, B29C 33/40, B29C 33/50, B29C 33/52, B29C 33/56, B29C 33/76, B29C 45/26, B29C 45/44, B29C 70/30, F02K 1/64, B29C 45/00, B29C 45/14, B29C 45/37, B29L 31/00

(54) **HYBRID MANDREL FOR USE IN TOOLING METHOD AND THE MANUFACTURE OF THRUST REVERSE CASCADES AND STRUCTURES SUSCEPTIBLE TO TRAPPED TOOLING**

(30) Priority: 07.04.2020 US 202063006281 P; 04.03.2021 US 202117192596
(71) Applicant: Rohr, Inc., Chula Vista, CA 91910-2098 (US)
(72) Inventor: THAI, Bryan, Poway, 92064 (US); RODRIGUEZ, Jonathan, Murrieta, 92563 (US); BOLES, Desirae, Bakersfield, 93308 (US); HUYNH, Kieu, El Monte, 91733 (US); NOLAN, Patrick J., Laguna Hills, 92653 (US)
(74) Representative: Dehns

(57) **Abstract**

A hybrid mandrel (120) for forming a composite part may comprise a core (130) and a sleeve (132) located around the core (130). The core (130) may include a rigid material. The sleeve (132) may comprise an elastomeric material. The part may be formed by locating the hybrid mandrel (120) in an injection mold (118), depositing a molten resin around the hybrid mandrel (120), curing the molten resin; and removing the hybrid mandrel (120).

## Description

### FIELD

The present disclosure (invention) relates to mandrels for forming composite structures, and, more particularly, to hybrid mandrels for manufacturing nacelle thrust reversers and other structures that are susceptible to trapped tooling.

### BACKGROUND

Modern aircraft typically utilize one or more gas turbine engines for propulsion. The engines may be housed in a nacelle, which may be wing-mounted, fuselage-mounted, tail-mounted, or some combination thereof. Typical engines include a fan that draws a flow of ambient air into the nacelle and the engine. The airflow is directed either into the engine core to form core engine flow or around the engine core to form a bypass flow. The core engine flow is initially passed through a compressor and then through a combustor where the pressurized core engine flow is mixed with fuel and ignited. Combustion of the fuel and air mixture results in a stream of high temperature and high pressure gas that is used to rotate a turbine downstream of the combustor. The compressor and the fan are rotated via structures connecting these components with the rotating turbine. The gas exiting the turbine is thereafter directed through an exhaust nozzle at the rear of the engine and expelled to the atmosphere.

The bypass flow is directed about the engine core and constrained by an inner wall of the nacelle. In turbofan engines, the bypass flow typically provides the main thrust for an aircraft. The bypass flow may also be used to decelerate an aircraft after landing or during a rejected takeoff. Thrust reversers mounted in the structure of the nacelle selectively reverse the direction of the bypass flow via a cascade array to generate reverse thrust. Cascade arrays are typically designed having complex curvatures to better generate the reverse thrust. Manufacture of the cascade array can prove difficult due the complex design and curvature of the cascade array. In particular, removing jigs from between the curved areas of the cascade array, after molding, increases the risk of breaking or otherwise damaging the cascade array.

### SUMMARY

According to an aspect of the present invention, there is a hybrid mandrel for forming a composite part. The hybrid mandrel may comprise a core including a rigid material and a sleeve located around the core, the sleeve may comprise an elastomeric material, and an external surface of the sleeve may be configured to form an interior surface of the composite part.

Optionally, the rigid material of the core may comprise at least one of a plastic, a metal, a metal alloy, or a ceramic. Optionally, the rigid material of the core may comprise a washout material. Optionally, the washout material may comprise at least one of a salt, a composition comprising particles in a soluble binder, or a plaster.

Optionally, the rigid material of the core may have a melting point greater than a melting point of the composite part and less than a melting point of the elastomeric material of the sleeve.

Optionally, a first portion of a first side of an exterior surface of the core may be generally parallel to a second portion of a second side of the exterior surface of the core. The first portion of the first side of the exterior surface and the second portion of the second side of the exterior surface may be generally parallel to a central axis of the core.

Optionally, a width of the core, as measured at a first end of the hybrid mandrel, may be greater than a width of the core, as measured at a second end of the hybrid mandrel, the second end of the hybrid mandrel being opposite the first end of the hybrid mandrel.

Optionally, a cap may be located in an orifice defined by the sleeve. A thickness of the sleeve, as measured between the cap and the external surface of the sleeve, may be generally uniform about a perimeter of the cap.

Optionally, the composite part may comprise at least one of a thrust reverser cascade, a wingbox, an aircraft door, or a flight control surface component.

According to another aspect of the present invention, there is a system for forming a cascade array for a thrust reverser. The system may comprise an injection mold and a hybrid mandrel located within a mold cavity of the injection mold, the hybrid mandrel may comprise a core and a sleeve located around the core, and the sleeve may comprise an elastomeric material.

Optionally, the core may comprise at least one of a plastic, a metal, a metal alloy, or a ceramic. Optionally, the core may comprise a washout material.

Optionally, sleeve may comprise a generally uniform thickness as measured between an external surface of the sleeve and an interior surface of the sleeve.

Optionally, a first side of the external surface of the sleeve may have a concave contour and a second side of the external surface of the sleeve may have a convex contour.

Optionally, an exterior surface of the core may be parallel to an external surface of the sleeve. In various embodiments, the core may include a flange extending from an exterior surface of the core. The flange may be located in a groove formed in an interior surface of the sleeve.

According to another aspect of the present invention there is a method of forming a composite part. The method may comprise depositing a material around a hybrid mandrel including a core and a sleeve located around the core, and the method may further comprise removing the core of the hybrid mandrel, and removing the sleeve from the composite part after removing the core.

Optionally, removing the core of the hybrid mandrel may comprise at least one of dissolving the core or melting the core.

Optionally, depositing the material around the hybrid mandrel may comprise locating a fiber reinforced composite material over an exterior surface of the sleeve of the hybrid mandrel.

Optionally, depositing the material around the hybrid mandrel may comprise depositing a molten resin around the hybrid mandrel.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a perspective view of a nacelle of a propulsion system, in accordance with various embodiments;
FIG. 1B illustrates an exploded view of a propulsion system, in accordance with various embodiments;
FIG. 2 illustrates a perspective view of a cascade array, in accordance with various embodiments;
FIGs. 3A and 3B illustrate a system including an injection mold and hybrid mandrels for forming a cascade array, in accordance with various embodiments
FIG. 3C illustrates removal of hybrid mandrels from a cascade array, in accordance with various embodiments;
FIGs. 4A and 4B illustrate a perspective view and a cross-section view, respectively, of a hybrid mandrel for forming a cascade array, in accordance with various embodiments;
FIG. 5 illustrates a cross-section view of hybrid mandrel for forming a cascade array, in accordance with various embodiments;
FIG. 6A illustrates a sleeve of a hybrid mandrel being filled with a core material, in accordance with various embodiments;
FIGs. 6B and 6C illustrate a perspective view and a cross-section view, respectively, of a hybrid mandrel for forming a cascade array, in accordance with various embodiments;
FIG. 7A illustrates a sleeve of a hybrid mandrel being filled with a core material, in accordance with various embodiments;
FIGs. 7B and 7C illustrate a perspective view and a cross-section view, respectively, of a hybrid mandrel for forming a cascade array, in accordance with various embodiments;
FIGs. 8A and 8B illustrate a perspective view and an assembly view, respectively, of a hybrid mandrel for forming a composite part with the hybrid mandrel including a core that can be pulled from a sleeve of the hybrid mandrel, in accordance with various embodiments;
FIGs. 9A, 9B, 9C, and 9D illustrate formation of a composite part using a hybrid mandrel, in accordance with various embodiments;
FIG. 10 illustrates a method of forming a composite part using a hybrid mandrel, in accordance with various embodiments; and
FIG. 11 illustrates a cross-section view of a hybrid mandrel having an interlocking core, in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that logical, mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Surface shading and/or crosshatching lines may be used throughout the figures to denote different parts, but not necessarily to denote the same or different materials. Throughout the present disclosure, like reference numbers denote like elements. Accordingly, elements with like element numbering may be shown in the figures, but may not necessarily be repeated herein for the sake of clarity.

As used herein, "aft" refers to the direction associated with the tail of an aircraft, or generally, to the direction of exhaust of the gas turbine engine. As used herein, "forward" refers to the direction associated with the nose (i.e., the front end) of an aircraft, or generally, to the direction of flight or motion.

Hybrid mandrels for forming a composite part are disclosed herein. In accordance with various embodiments, the hybrid mandrels may a core and a sleeve located around the core. The core comprises a hard, rigid material. The sleeve comprises an elastomeric material. After forming, at least a portion, of the composite part around the hybrid mandrel, the core is removed from the sleeve of the hybrid mandrel. With the core removed, the sleeve may be bent, stretched, or otherwise contorted to remove the sleeve while applying little to no pressure to the composite part. In this regard, hybrid mandrels, as disclosed herein, may be used to form parts having complex geometry, which are susceptible to trapped tooling (i.e., are at risk of being damaged when removing the mandrel or jig about which the composite material is deposited).

The hybrid mandrels, systems, and methods disclosed herein may find particular use in manufacture of thrust reverser cascades. However, the disclosed hybrid mandrels, systems, and methods may be adapted for the manufacture of a variety of other parts and, in particular, parts having hollow portions or other complex geometries, which are susceptible to trapped tooling (i.e., are at risk of being damaged when removing the mandrel or jig). For example, the hybrid mandrels, systems, and methods disclosed herein may be used to form aircraft doors, wingboxes, and/or flight control surface components (e.g., ailerons, elevators, rudders, spoilers, flaps, slats, etc.). As such, numerous applications of the present disclosure may be realized.

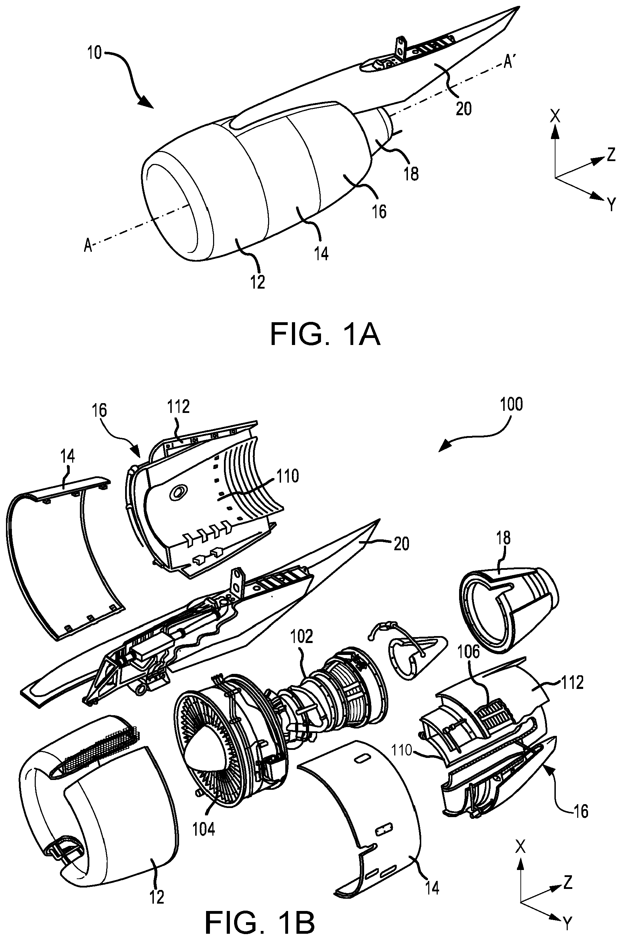

Referring to FIG. 1A, a nacelle 10 for a propulsion system is illustrated, in accordance with various embodiments. Nacelle 10 may comprise an inlet assembly 12, a fan cowl assembly 14, a thrust reverser assembly 16, and an exhaust system 18. In various embodiments, nacelle 10 may include a pylon 20. Pylon 20 may be configured to mount nacelle 10 and an engine surrounded by nacelle 10 to an aircraft structure, such as a wing or aircraft fuselage.

With reference to FIG. 1B, and continuing reference to FIG. 1A, an exploded view of a propulsion system 100 is illustrated. In accordance with various embodiments, propulsion system 100 includes nacelle 10 and a gas turbine engine 102. Gas turbine engine 102 may be surrounded by components of nacelle 10. Nacelle 10 may provide smooth aerodynamic surfaces for airflow around and into gas turbine engine 102. Nacelle 10 may define at least a portion of one or more bypass air duct(s) through propulsion system 100.

In operation, a fan 104 of gas turbine engine 102 draws and directs a flow of air into and through propulsion system 100. The air may be divided into two principal flow paths: a core flow path through the core of gas turbine engine 102, and a bypass flow path through one or more bypass ducts outside of the core of gas turbine engine 102. The air in the bypass flow path may be directed around the engine core through one or more duct(s) defined by nacelle 10. In various embodiments, at least a portion of the bypass flow path is defined by thrust reverser assembly 16 and an inner fixed structure (IFS) 110. For example, thrust reverser assembly 16 may comprise translating sleeve 112. Bypass air output from fan 104 may flow between an exterior (or radially outward) surface of IFS 110 and an interior (or radially inward) surface of translating sleeve 112. In accordance with various embodiments, thrust reverser assembly 16 includes a cascade array 106 (referred to herein as cascade 106). Translating sleeve 112 is configured to translate aft and expose cascade 106, thereby generating reverse thrust.

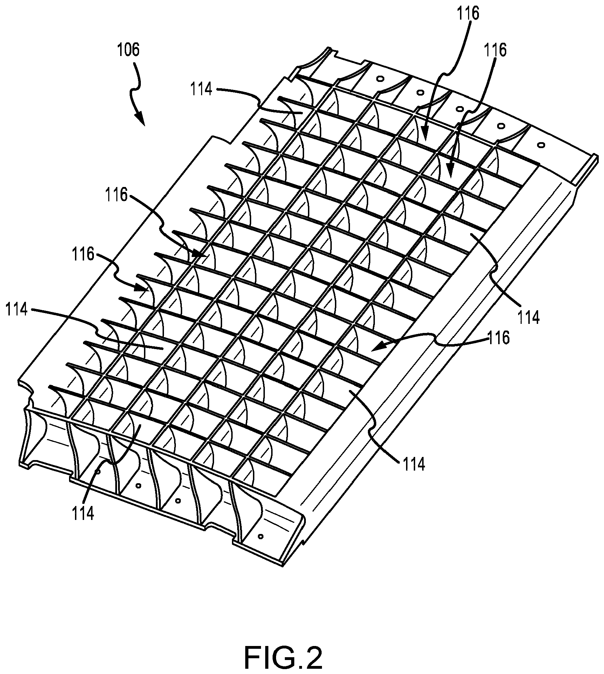

With reference to FIG. 2, a cascade 106 of thrust reverser assembly 16 is illustrated. Cascade 106 includes a series of aerodynamic structures or "vanes" 114 for redirecting the bypass air in a desired direction (e.g., forward) during reverse thrust. Vanes 114 define a plurality of channels 116 through which air flows during reverse thrust. It may be desirable to form vanes 114 with aerodynamic surfaces of varying complexity and curvature to better control the redirecting of the bypass flow and/or to increase reverse thrust generation and/or decease noise.

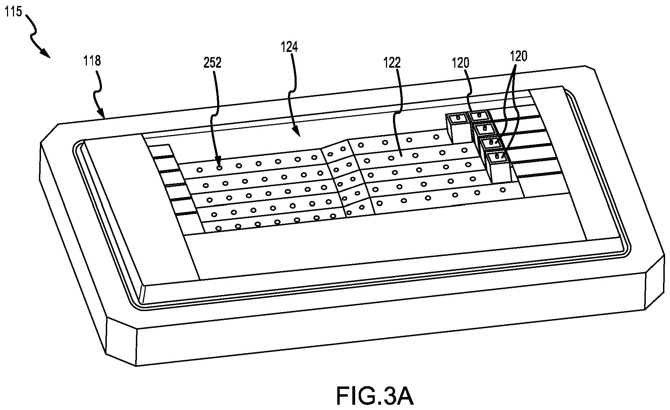

With reference to FIGs. 3A, and continuing reference to FIG. 2, a system 115 for forming a cascade 106 for a thrust reverser is illustrated. System 115 may include an injection mold 118 and a plurality of hybrid mandrels 120. In accordance with various embodiments, injection mold 118 is configured to receive and support hybrid mandrels 120. Hybrid mandrels 120 may be arranged over the floor 122 of a mold cavity 124 of injection mold 118. The location of each hybrid mandrel 120 is selected to coincide with a channel 116 of cascade 106. The shape (i.e., contour) of each hybrid mandrel 120 is selected to form a channel 116 having a curvature that mirrors the contouring of its respective hybrid mandrel 120.

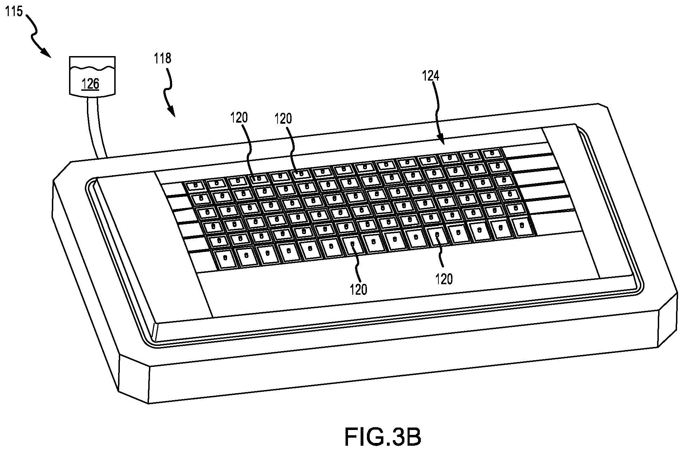

With reference to FIG. 3B, after the hybrid mandrels 120 are in place, a resin 126 (e.g., a thermoplastic, thermosetting polymer, composite material, or other desired material) is injected into mold cavity 124. The molten resin 126 flows around and between the hybrid mandrels 120. Mold cavity 124 and hybrid mandrels 120 are configured to shape the molten resin 126 such that, once the resin solidifies (e.g., is cured), the solidified resin forms the structures (e.g., vanes 114, walls 117, etc.) of cascade 106.

In various embodiments, cascade 106 may be formed from a fiber reinforced composite material. The fiber reinforced composite material may comprise carbon fibers, glass fibers, ceramic fibers, synthetic fibers such as poly-paraphenylene terephthalamide (KEVLAR), or any other suitable fiber. In various embodiments, the fibers are located within a matrix. The matrix may comprise a thermosetting material (e.g., a thermosetting epoxy resin, thermosetting polyimide resin, etc.), a thermoplastic material (e.g., polyether ether ketone, polyetherimide, polyphenylene sulfide, etc.), or any other suitable matrix material. In various embodiments, the fiber reinforced composite material may comprise pre-impregnated carbon fiber tow, slit fiber tape, or any other fiber reinforced material. In various embodiments, cascade 106 may be formed from a dry fiber strips (i.e., fiber strips which do not include a matrix). In various embodiments, cascade 106 may be formed by depositing and/or wrapping the fiber reinforced composite material on and around hybrid mandrels 120. In various embodiments, after the fiber reinforced composite material is located over and/or wrapped around hybrid mandrels 120, the fiber reinforced composite material may be cured. In various embodiments, cascade 106 may be formed by depositing and/or wrapping fiber lay-ups (e.g., carbon fiber, glass fiber, ceramic fiber, synthetic fibers, or any other suitable fiber layup) on and/or around hybrid mandrels 120. In various embodiments, after the fiber lay-ups are in place, molten resin 126 may be injected and solidified around the fiber layups.

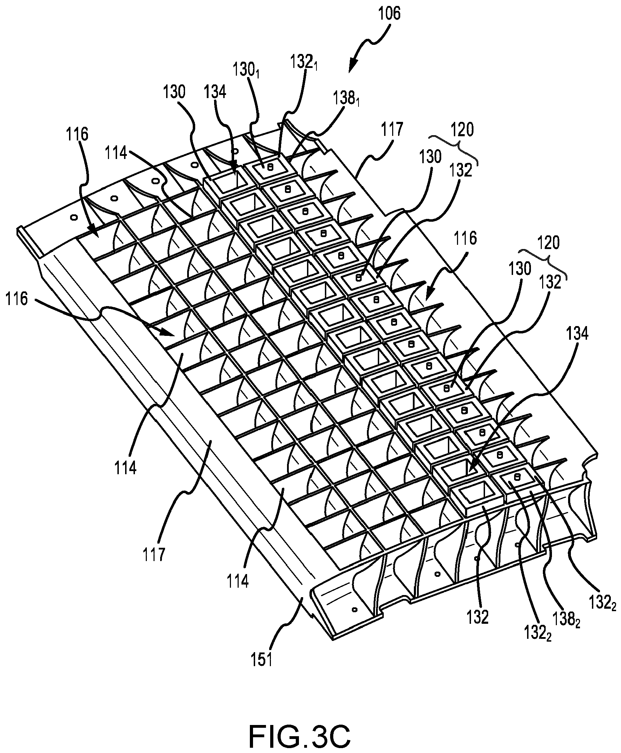

With additional reference to FIG. 3C, after curing the molten resin 126 and/or the fiber reinforced composite material, the hybrid mandrels 120 are removed, thereby producing cascade 106. In accordance with various embodiments, each hybrid mandrel 120 includes a core 130 and a sleeve 132 located around the core 130. Stated differently, core 130 is located in a cavity 134 defined by sleeve 132. After curing (or otherwise solidifying) the material of cascade 106, the core 130 of each is hybrid mandrel 120 is removed from its respective sleeve 132. With the core 130 removed, the sleeve 132 can be contorted and/or stretched (e.g., placed under tension), thereby allowing the sleeve 132 to be easily removed from between the curved vanes 114 while applying little to no pressure against vanes 114.

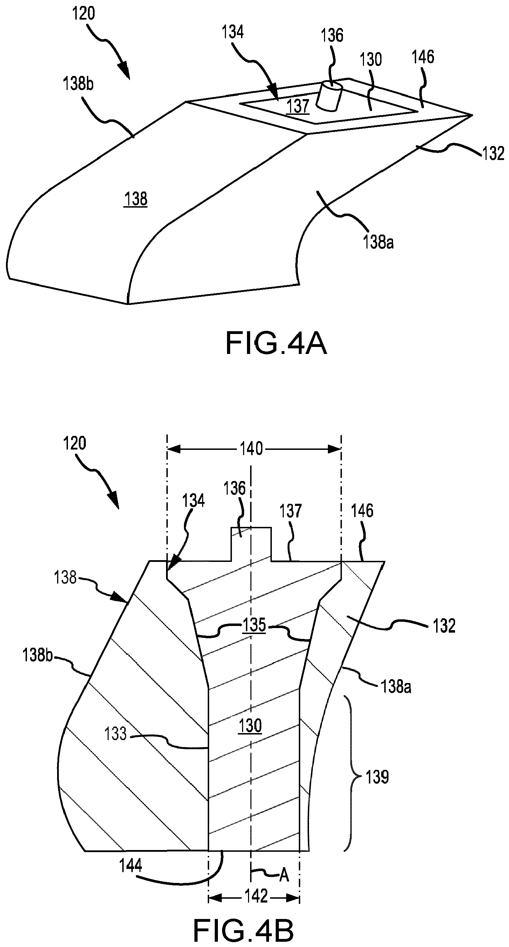

With reference to FIGs. 4A and 4B, a hybrid mandrel 120 is illustrated. In accordance with various embodiments, hybrid mandrel 120 includes core 130 and sleeve 132. Sleeve 132 may be located around and may contact an exterior surface 133 of core 130. Stated differently, core 130 is located in a cavity 134 defined by an interior surface 135 of sleeve 132. The curvature of the external surface 138 of sleeve 132 (i.e., the surface of sleeve 132 that is oriented away from interior surface 135 of sleeve 132) may be designed to form cascade channels 116 having complex or other desired curvature. In this regard, the surfaces of a channel 116, with momentary reference to FIG. 2, formed by hybrid mandrel 120 will mirror external surface 138 of sleeve 132. External surface 138 is configured to form the aerodynamic surfaces (e.g., a generally concave pressure side surface and agenerally convex suction side surface) of the vanes 114 defining each channel 116. For example, a first side 138a of external surface 138 may have a concave contour and may form the convex suction side surface a first vane 114, and a second side 138b of external surface 138, located opposite and oriented away from the first side 138a, may have a convex contour and may form concave the pressure side surface of the adjacent (or second) vane 114.

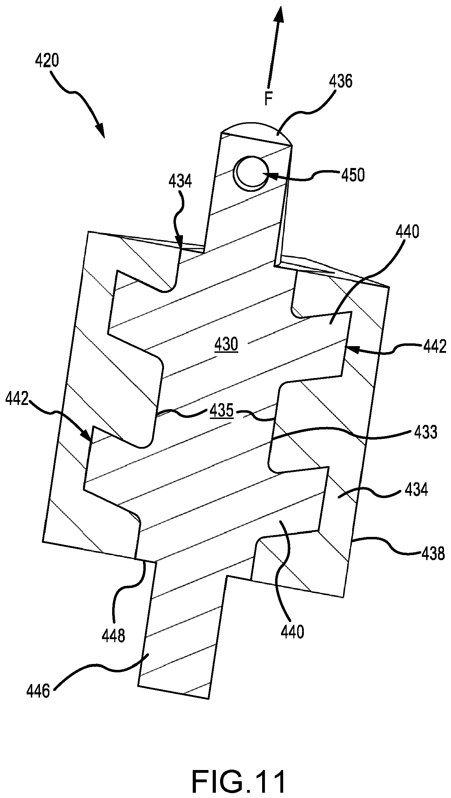

In accordance with various embodiments, sleeve 132 may be made of an elastomeric material (e.g., rubber, polyurethane, polybutadiene, neoprene, silicone, etc.) and core 130 may be made of a hard, rigid material. In various embodiments, the material of core 130 is harder than the material of sleeve 132. Core 130 may be made of a plastic (e.g., high-density polyethylene (HDPE), polycarbonate, polyether ether ketone (PEEK)), a metal or metal alloy, ceramic, or any other suitably hard, rigid material. In various embodiments, core 130 may include a tab 136. Tab 136 extends from an upper (or first) surface 137 of core 130. Tab 136 creates an area that can be easily gripped, when removing core 130 from sleeve 132.. In various embodiments, tab 136 can be used as tooling pin to locate hybrid mandrel 120 within the injection mold 118. In various embodiments, tab 136 may define an orifice (similar to orifice 450 in FIG. 11) configured to receive a hook or other tool, which may be employed to remove core 130 from sleeve 132.

The material of sleeve 132 is selected to be flexible enough to allow sleeve 132 to contort and/or stretch in response to removal of core 130, and also hard enough to resist deformation of external surface 138 during the injection molding process. The dimensions and shape of core 130 (and cavity 134) are selected to minimize the thickness of sleeve 132, extending between external surface 138 and interior surface 135, while allowing the core 130 to be used with and removed from sleeves 132 of any curvature with little or no pressure being applied to vanes 114. For example, in various embodiments, with combined reference to FIG. 4B and 3C, the core 130 of each hybrid mandrel 120 may be identical, or nearly identical, to the cores 130 of the other hybrid mandrels 120, while the external surfaces 138 of the sleeves 132 are varied to form channels 116 of varying curvature. In this regard, each core 130 may be used with any sleeve 132. Stated differently, the external surface 138₁ of a first sleeve 132₁ may have a different curvature or contouring as compared to the external surface 138₂ of a second sleeve 132₂. The core 130₁ located in first sleeve 132₁ may be interchangeable with the core 130₂ located in second sleeve 132₂. Configuring cores 130 for use with any sleeve 132 tends to reduce manufacturing time and costs.

Retuning to FIGs. 4A and 4B, in various embodiments, at least, a portion 139 of the opposing sides of exterior surface 133 of core 130 are generally parallel to one another and/or generally parallel to a central axis A of core 130. As used in the previous context, generally parallel mean ±5° from parallel. Central axis A of core 130 is perpendicular to upper surface 137 of core 130. For example, core 130 may be a cube, cylinder, cuboid, triangular prism, hexagonal prism, or the like. In various embodiments, a width, or diameter, 140 of core 130, as measured at upper surface 137, may be greater than a width, or diameter, 142 of core 130, as measured at a lower (or second) surface 144 of core 130. Lower surface 144 is opposite and oriented away from upper surface 137. The width 140 of core 130 may be selected to minimize the thickness of sleeve 132, extending between external surface 138 and interior surface 135, at an upper (or first) end 146 of hybrid mandrel 120. Reducing the thickness of sleeve 132 and/or increasing the width 140 of core 130 at upper end 146 may allow for easier and/or more consistent alignment of the vanes 114 of cascade 106, as the width 140 of the cores 130 and/or the thickness of the sleeves 132 may be the same at the upper end 146 of each hybrid mandrel 120. Stated differently, with momentary combined reference to FIG. 4B and FIG. 3C, the thickness of a first sleeve 132₁, as measured between external surface 138 and interior surface 135 of the first sleeve 132₁ at an upper end 146, may be equal to the thickness of a second sleeve 132₂, as measured at the upper end 146 of the second sleeve 132₂, even though the external surface 138₁ of first sleeve 132₁ has a different curvature or contouring as compared to the external surface 138₂ of the second sleeve 132₂.

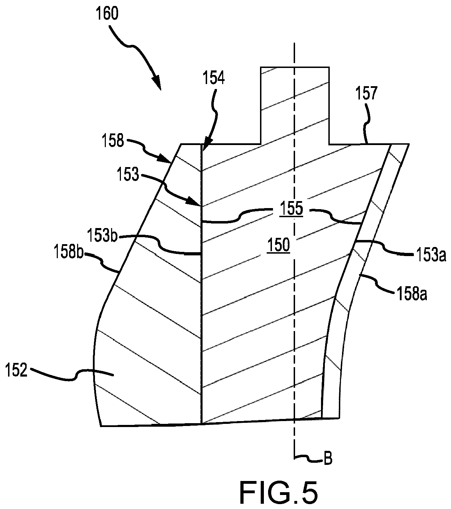

With reference to FIG. 5, and continuing reference to FIG. 3C, a hybrid mandrel 160 is illustrated. In various embodiments, one or more hybrid mandrel(s) 160 may be employed to form cascade 106. Hybrid mandrel 160 may be used in place of one or more of the hybrid mandrels 120. Hybrid mandrel 160 includes a core 150 and a sleeve 152. Core 150 is located in a cavity 154 defined by an interior surface 155 of sleeve 152. Core 150 is formed from a rigid, hard material similar to core 130. Sleeve 152 is formed from an elastomeric material similar to sleeve 132.

In various embodiments, a first side 153a of an exterior surface 153 of core 150 may be angled relative to the central axis B of core 150 and a second side 153b of exterior surface 153 may be generally parallel to central axis B. As used in the previous context, generally parallel mean ±5° from parallel. Central axis B of core 150 is an imaginary plane that is perpendicular to upper surface 157 of core 150 and may be located through the radial center of . In various embodiments, the angle, contour, and/or curvature of first side 153a may be the same as the angle, contour, and/or curvature of a first side 158a of an external surface 158 of sleeve 152. In various embodiments, first side 153a of core 150 may be oriented toward first side 158a of external surface 158 of sleeve 152, and second side 153b of core 150 may be oriented toward second side 158b of external surface 158 of sleeve 152. In various embodiments, the portions of exterior surface 153 that are oriented toward convex portions (e.g. second side 158b) of external surface 158 may be generally parallel to central axis B and/or less angled relative to axis B as compared to the portions of exterior surface 153 that are oriented toward concave portions (e.g. first side 158a) of external surface 158. The interior surface 155 of sleeve 152 mirrors the shape of exterior surface 153 of core 150.

In response to removing core 150 from cavity 154, sleeve 152 can be bent, stretched, or otherwise contorted, thereby allowing the sleeve 152 to be removed with little or no pressure being applied to vanes 114. Reducing the pressure applied to vanes 114 during removal of hybrid mandrels 120 tends to reduce the risk of damage to vanes 114. The two-piece construction of hybrid mandrel 120, wherein core 150 is formed of rigid material and sleeve 152 is formed of a flexible material, allows cascade 106 to be formed with complex curvatures, while reducing the risk of damage associated with removing one-piece mandrels or jigs.

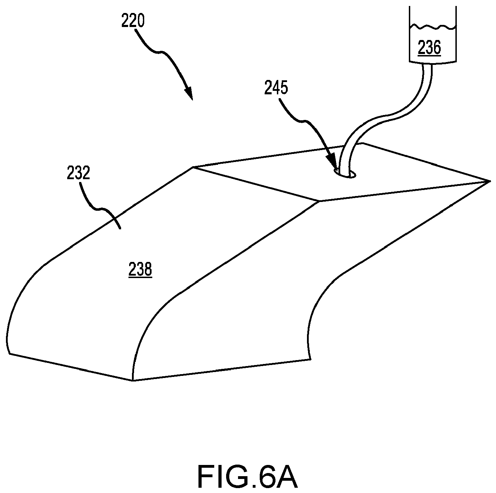

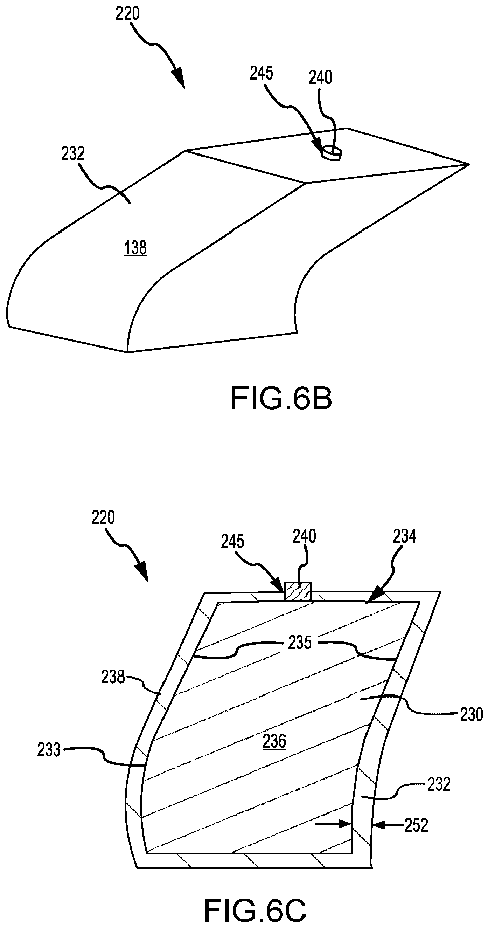

With reference to FIGs. 6A, 6B, and 6C, and continuing reference to FIG. 3C, a hybrid mandrel 220 is illustrated. In various embodiments, one or more hybrid mandrel(s) 220 may be employed to form cascade 106. Hybrid mandrel 220 may be used in place of one or more of the hybrid mandrels 120. In various embodiments, hybrid mandrels 220 may be used to form vanes 114 and channels 116 having a greater curvature, as compared to the vanes 114 and channels 116 formed by hybrid mandrels 120.

In accordance with various embodiments, hybrid mandrel 220 includes a core 230 and a sleeve 232. Sleeve 232 is located around and may surround an exterior surface 233 of core 230. Stated differently, core 230 is located in a cavity 234 defined by an interior surface 235 of sleeve 232. In various embodiments, core 230 is formed by injecting or depositing a core material 236 into sleeve 232. Core material 236 may be a washout material. As used herein, a washout material refers to a material that hardens upon drying or curing and that may be dissolved or broken down by applying a solvent (e.g., water) to the hardened washout material. For example, the washout material may be a composition comprising a mixture of solid particles (e.g., sand, ceramic, etc.) in a soluble binder (e.g., polyvinyl alcohol (PVA)). The washout material may comprise a soluble material or soluble particles such as a salt. The washout material may comprise as a plaster. Core material 236 is solidified, or hardened, to form core 230, prior to using hybrid mandrel 220 in system 115.

In various embodiments, sleeve 232 may define an orifice 245 through which core material 236 is injected, filled, or casted. A plug 240 may be inserted into orifice 245, after injection core material 236. Plug 240 may seal orifice 245, thereby preventing molten resin 126, with momentary reference to FIG. 3B, from entering cavity 234. In various embodiments, tape or other suitable cover may be used to seal orifice 245. The curvature of the external surface 238 of sleeve 232 (i.e., the surface oriented away from interior surface 235) is designed to form cascade channels 116 having complex or other desired curvature. Sleeve 232 may be made of an elastomeric material (e.g., rubber, polyurethane, polybutadiene, neoprene, silicone, etc.) and core 230 may be made of a hard, rigid material. Once core material 236 hardens, core 230 is harder than the material of sleeve 232.

After curing (or otherwise solidifying) the material of cascade 106, core 230 may be removed from sleeve 232 by dissolving or melting core material 236. For example, in various embodiments, core material 236 may be washout material. Core material 236 may be dissolved or "washed out" of sleeve 232 by removing plug 240 and injecting a solvent (e.g., water) through orifice 245 and into cavity 234. The solvent is configured to dissolve the core material 236. The dissolved core material 236 may flow out orifice 245. In various embodiments, sleeve 232 may include a second orifice, including a removable plug, similar to plug 240, located therein. The removable plug may be removed and the dissolved core material 236 may exit sleeve 232 through the second orifice.

In various embodiments, core 230 may be removed from cavity 234 by melting core material 236. For example, in various embodiments, core material 236 may comprise a metal, metal alloy, eutectic alloy, or other material having a melting point greater than the cure temperature for molten resin 126, with momentary reference to FIG. 3C, and less than the melting point of sleeve 232. After curing (or otherwise solidifying) the material of cascade 106, hybrid mandrel 220 is heated to a temperature sufficient to melt core material 236. The melted core material 236 may be removed from sleeve 232 through orifice 245. In various embodiments, sleeve 232 may include a second orifice, including a removable plug, similar to plug 240, located therein. The removable cap may be removed and the melted core material 236 may exit sleeve 232 through the second orifice and/or through orifice 245. With core 230 removed, sleeve 232 may be bent, stretched, or otherwise contorted to remove sleeve 232 from cascade 106 with little or no pressure applied to vanes 114.

Removing core 230 by dissolving or melting core material 236 may allow hybrid mandrels 220 for forming vanes 114 and channels 116 of increased curvature, as compared to the vanes 114 and channels 116 formed by hybrid mandrels 120. Removing core 230 by dissolving or melting core material 236 may allow exterior surface 233 of core 230 to be formed having the same curvature as external surface 238 of sleeve 232. Stated differently, exterior surface 233 of core 230 may be parallel to external surface 238 of sleeve 232. In various embodiments, removing core 230 by dissolving or melting core material 236 may allow for a thickness 252 of sleeve 232, as measured between external surface 238 and interior surface 235 of sleeve 232, to be reduced. In various embodiments, removing core 230 by dissolving or melting core material 236 may allow sleeve 232 to be formed having a uniform, or generally equal, thickness 252 between external surface 238 and interior surface 235. As used in the previous context only, a "generally" equal thickness means a variance of less than ±5%.

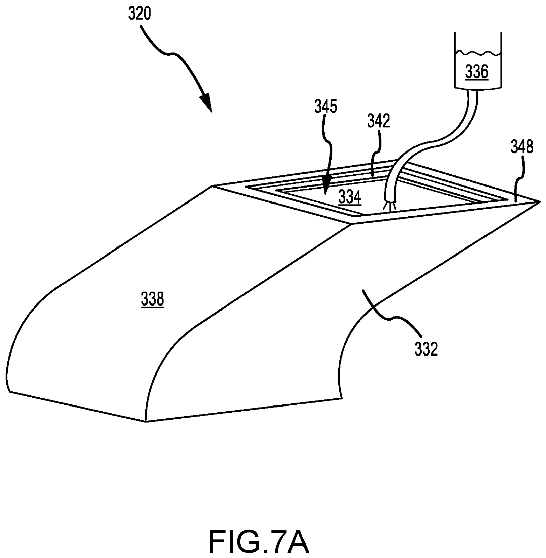

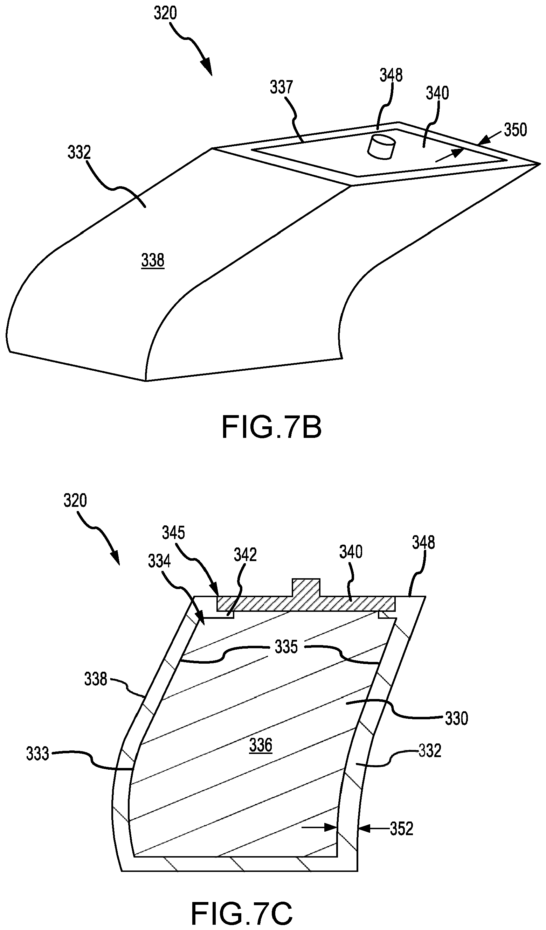

With reference to FIGs. 7A, 7B, and 7C, and continuing reference to FIG. 3C, in various embodiments, one or more hybrid mandrel(s) 320 may be employed to form cascade 106. Hybrid mandrel 320 may be used in place of one or more of the hybrid mandrels 120. In various embodiments, hybrid mandrels 320 may be used for form vanes 114 and channels 116 having a greater curvature, as compared to the vanes 114 and channels 116 formed by hybrid mandrels 120.

In accordance with various embodiments, hybrid mandrel 320 includes a core 330 and a sleeve 332. Sleeve 332 is located around an exterior surface 333 of core 330. Stated differently, core 330 is located in a cavity 334 defined by an interior surface 335 of sleeve 332. In various embodiments, core 330 is formed by injecting a core material 336 into sleeve 332. In various embodiments, sleeve 332 may define an orifice 345 through which core material 336 is injected, deposited, or casted. Core material 336 may be a washout material. The washout material may be a composition comprising a mixture of solid particles (e.g., sand, ceramic, etc.) in a soluble binder (e.g., PVA). The washout material may comprise a soluble material or soluble particles such as a salt. The washout material may comprise as a plaster. Core material 336 is solidified, or hardened, to form core 330, prior to using hybrid mandrel 320 in system 115.

A cap 340 may be inserted into orifice 345, after injection of core material 336. Cap 340 may seal orifice 345, thereby preventing molten resin 126, with momentary reference to FIG. 3B, from entering cavity 334. The area and shape of cap 340 may be selected to minimize the thickness of sleeve 332 around the perimeter of cap 340. Reducing the thickness of sleeve 332 and/or increasing the area of cap 340 may allow for easier and/or more consistent alignment of the vanes 114 of cascade 106, as the area and shape of the caps 340 and/or the thickness 350 of the sleeves 332 may be the same at the upper end 348 of each hybrid mandrel 320. In various embodiments, a thickness 350 of sleeve 332, as measured between an outer perimeter 337 of cap 340 and external surface 338 of sleeve 332, may be generally uniform (i.e., equal) about the outer perimeter 337 of cap 340. In various embodiments, the cap 340 may be interchangeable between sleeves 332. In various embodiments, tape or other suitable cover may be used to seal orifice 345. In various embodiments, cap 340 may be located on a lip 342 formed by sleeve 332.

The curvature of the external surface 338 of sleeve 332 (i.e., the surface oriented away from interior surface 335) is designed to form cascade channels 116 having complex or other desired curvature. Sleeve 332 may be made of an elastomeric material (e.g., rubber, polyurethane, polybutadiene, neoprene, silicone, etc.) and core 330 may be made of a hard, rigid material. Once core material 336 hardens, core 330 is harder than the material of sleeve 332.

After curing (or otherwise solidifying) the material of cascade 106, core 330 may be removed from sleeve 332 by dissolving or melting core material 336. For example, in various embodiments, core material 336 may be a washout material. Core material 336 may be dissolved or "washed out" of sleeve 332 by removing cap 340 and injecting a solvent (e.g., water) through orifice 345 and into cavity 334. The solvent is configured to dissolve the core material 336. The dissolved core material 336 may flow out orifice 345.

In various embodiments, core 330 may be removed from cavity 334 by melting core material 336. For example, in various embodiments, core material 336 may comprise a metal, metal alloy, eutectic alloy, or other material having a melting point greater than the cure temperature for molten resin 126, with momentary reference to FIG. 3C, and less than the melting point of sleeve 332. After curing (or otherwise solidifying) the material of cascade 106, hybrid mandrel 320 is heated to a temperature sufficient to melt core material 336. The melted core material 336 may be removed from sleeve 332 through orifice 345.

Removing core 330 by dissolving or melting core material 336 may allow exterior surface 333 of core 330 to be formed having the same curvature as external surface 338 of sleeve 332. Stated differently, exterior surface 333 of core 330 may be parallel to external surface 338 of sleeve 332. In various embodiments, removing core 330 by dissolving or melting core material 336 may allow for a thickness 352 of sleeve 332, as measured between external surface 338 and interior surface 335 of sleeve 332, to be reduced. In various embodiments, removing core 330 by dissolving or melting core material 336 may allow sleeve 332 to be formed having a uniform, or generally equal, thickness 352 between external surface 338 and interior surface 335. As used in the previous context only, a "generally" equal thickness means a variance of less than ±5%.

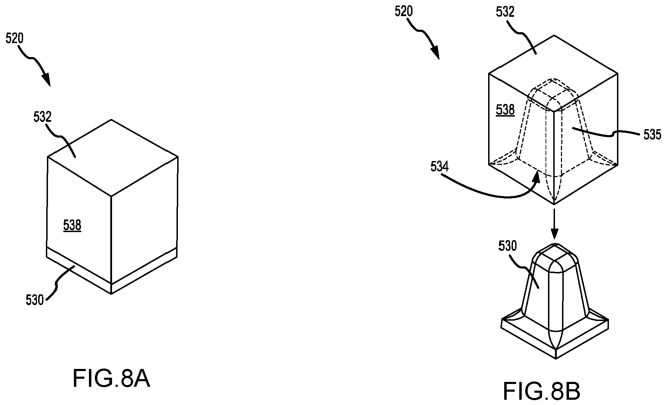

With reference to FIGs. 8A and 8B, a hybrid mandrel 520 is illustrated. Hybrid mandrel 520 may be employed to form, at least a portion of, a composite part having channel or other complex geometry that renders the part susceptible to trapped tooling. Hybrid mandrel 520 includes a core 530 and a sleeve 532. Core 530 is located in a cavity 534 defined by an interior surface 535 of sleeve 532. Core 530 is formed from a rigid, hard material similar to core 130, in FIG. 4A. Sleeve 532 is formed from an elastomeric material similar to sleeve 132 in FIG. 4B.

In various embodiments, hybrid mandrel 520 may be employed to form, at least a portion of, an aircraft door, a wingbox, a flight control surface component (e.g., an aileron, elevator, rudder, spoiler, flap, slat, etc.), or other composite part. In various embodiments, the composite part may be formed by depositing and/or wrapping a fiber reinforced composite material on or around the external surface 538 of sleeve 532. The fiber reinforced composite material may comprise carbon fibers, glass fibers, ceramic fibers, synthetic fibers such as poly-paraphenylene terephthalamide (KEVLAR), or any other suitable fiber. In various embodiments, the fibers are located within a matrix. The matrix may comprise a thermosetting material (e.g., a thermosetting epoxy resin, thermosetting polyimide resin, etc.), a thermoplastic material (e.g., polyether ether ketone, polyetherimide, polyphenylene sulfide, etc.), or any other suitable matrix material. In various embodiments, the fiber reinforced composite material may comprise pre-impregnated carbon fiber tow, slit fiber tape, or any other fiber reinforced material. In various embodiments, composite part may be formed by depositing dry fiber strips (i.e., fiber strips which do not include a matrix) over sleeve 532 of hybrid mandrel 520. In various embodiments, after the fiber reinforced composite material is located over and/or wrapped around hybrid mandrels 520, the fiber reinforced composite material may be cured. In various embodiments, fiber lay-ups (e.g., carbon fiber, glass fiber, ceramic fiber, synthetic fibers, or any other suitable fiber layup) may be deposited on and/or around hybrid mandrels 520. In various embodiments, after the fiber lay-ups are in place, a molten resin may be injected and solidified around the fiber layups to form the fiber reinforced composite material of the composite part.

In accordance with various embodiments, after curing (or otherwise solidifying) the fiber reinforced composite material, core 530 is removed from sleeve 532. Core 530 may be removed by pulling core 530 (i.e., applying a force configured to remove core 530) from cavity 534. After removing core 530 from sleeve 532, sleeve 532 can be bent, stretched, or otherwise contorted, thereby allowing the sleeve 532 to be removed with little or no pressure being applied to the solidified fiber reinforced composite material.

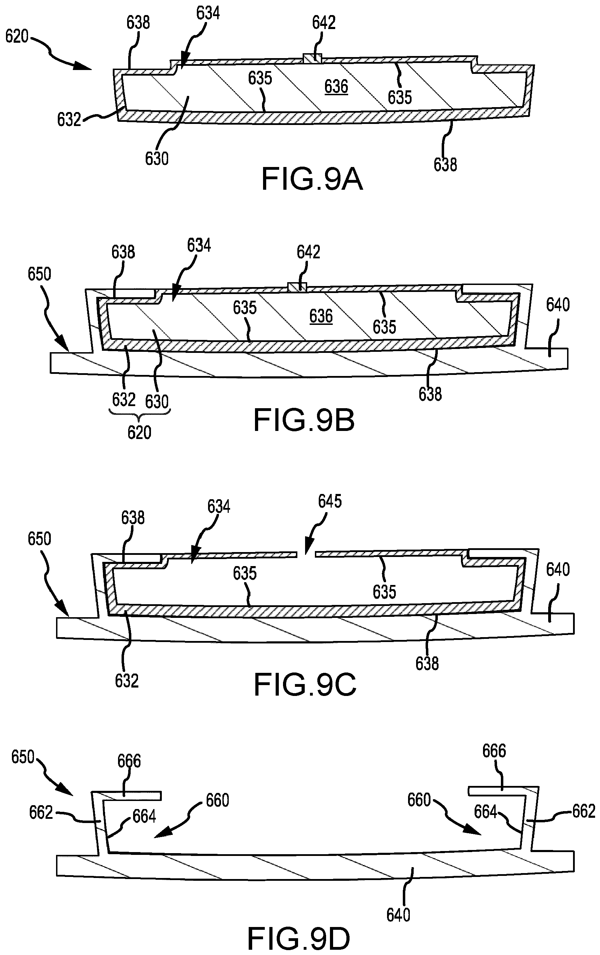

With reference to FIGs. 9A, a hybrid mandrel 620 is illustrated. Hybrid mandrel 620 includes a core 630 and a sleeve 632. Core 630 is located in a cavity 634 defined by an interior surface 635 of sleeve 632. Core 630 is a rigid, hard material. Sleeve 632 is formed from an elastomeric material similar to sleeve 132. In various embodiments, core 630 is formed by injecting, depositing, or casting a core material 636 in sleeve 632. Core material 636 may be a washout material. The washout material may be a composition comprising a mixture of solid particles (e.g., sand, ceramic, etc.) in a soluble binder (e.g., PVA). The washout material may comprise a soluble material or soluble particles such as a salt. The washout material may comprise as a plaster.

With reference to FIG. 9B, in accordance with various embodiments, a composite part 650 may be formed by depositing and/or wrapping a fiber reinforced composite material 640 on or around an external surface 638 of sleeve 632. The fiber reinforced composite material 640 may comprise carbon fibers, glass fibers, ceramic fibers, synthetic fibers such as poly-paraphenylene terephthalamide (KEVLAR), or any other suitable fiber. In various embodiments, the fibers are located within a matrix. The matrix may comprise a thermosetting material (e.g., a thermosetting epoxy resin, thermosetting polyimide resin, etc.), a thermoplastic material (e.g., polyether ether ketone, polyetherimide, polyphenylene sulfide, etc.), or any other suitable matrix material. In various embodiments, the fiber reinforced composite material 640 may comprise pre-impregnated carbon fiber tow, slit fiber tape, or any other fiber reinforced material. In various embodiments, composite part 650 may be formed by depositing dry fiber strips (i.e., fiber strips which do not include a matrix) over sleeve 632 of hybrid mandrel 620. In various embodiments, after the fiber reinforced composite material 640 is located over and/or wrapped around hybrid mandrel 620, the fiber reinforced composite material 640 may be cured. In various embodiments, fiber lay-ups (e.g., carbon fiber, glass fiber, ceramic fiber, synthetic fibers, or any other suitable fiber layup) may be deposited on and/or around hybrid mandrel 620. In various embodiments, after the fiber lay-ups are in place, a molten resin may be injected and solidified around the fiber layups to form the fiber reinforced composite material 640 and composite part 650.

With reference to FIG. 9C, and continuing reference to FIG. 9B, in accordance with various embodiments, after curing (or otherwise solidifying) the fiber reinforced composite material 640, core 630 is removed from sleeve 632. In various embodiments, core 630 is removed from sleeve 632 by dissolving or melting core material 636. For example, in various embodiments, core material 636 may be dissolved or "washed out" of sleeve 632 by removing a plug 642 and injecting a solvent (e.g., water) through an orifice 645 and into cavity 634. The solvent is configured to dissolve the core material 636. The dissolved core material 636 may flow out orifice 645. In various embodiments, core material 636 is removed by melting core material 636. The melted core material 636 may be removed from sleeve 632 through orifice 645.

After removing core 630 from sleeve 632, sleeve 632 can be bent, stretched, or otherwise contorted, thereby allowing the sleeve 632 to be removed from composite part 650. With reference to FIG. 9D, composite part 650 is illustrated after removal of sleeve 632. Composite part 650 may be an aircraft door, a wingbox, or a flight control surface component (e.g., an aileron, elevator, rudder, spoiler, flap, slat, etc.). Composite part 650 may include one or more channels 660. Channels 660 may be defined, at least, partially by flanges 662 of composite part. Stated differently, an interior surface 664 of flanges 662 and composite part 650 may define, at least, a portion of channels 660. Flanges 662 may include a lip 666. Lip 666 tends to be susceptible to trapped tooling. In this regard, a hard, one piece mandrel or jig cannot generally be removed from channels 660 due the interference between the one piece mandrel and lips 666. In contrast, hybrid mandrel 620 is configured to form, and be removed from, a composite part 650 having channels 660 without damaging composite part 650, as after removal of core 630, the sleeve 632 can be bent and/or contorted to remove sleeve 632 from channels 660 with little or no pressure being applied to lips 666.

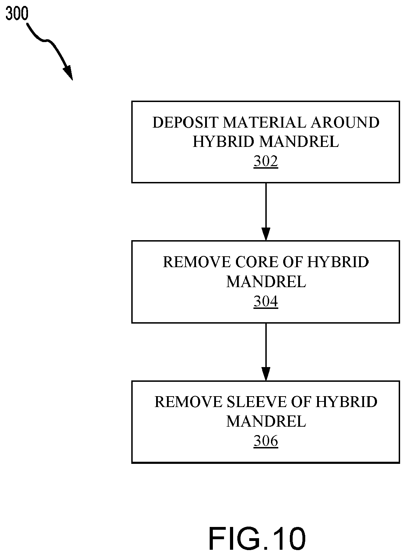

With reference to FIG. 10, a method 300 of forming a composite part is illustrated. In accordance with various embodiments, method 300 may comprise depositing a material around a hybrid mandrel including a core and a sleeve located around the core (step 302). Method 300 further comprises removing the core of the hybrid mandrel from the sleeve (step 304) and removing the sleeve of the hybrid mandrel after removing the core (step 306).

In various embodiments, the material may comprise a fiber reinforced composite material and step 302 may include locating fiber reinforced composite material around an exterior surface of the sleeve. In various embodiments, step 302 may include curing the fiber reinforced composite after locating fiber reinforced composite material around an exterior surface of the sleeve. In various embodiments, step 302 may include locating fiber layup around an exterior surface of the sleeve and depositing a molten resin over the fiber layup. In various embodiments, step 302 may include locating the hybrid mandrel in an injection mold, depositing a molten resin around the hybrid mandrel, and curing the resin. In various embodiments, step 304 may include removing the core of the hybrid mandrel by at least one of dissolving the core or melting the core.

With combined reference to FIG. 10 and FIG. 9C, in various embodiments, step 302 may include depositing fiber reinforced composite material 640 around hybrid mandrel 620. Step 304 may include removing core 630 from sleeve 632. Step 306 may include removing sleeve 632 from composite part 650 after removing core 630.

With reference to FIG. 11, a hybrid mandrel 420 is illustrated. With combined reference to FIG. 11 and FIGs. 3A and 3C, in various embodiments, one or more hybrid mandrels 420 may be placed in mold cavity 124 to form one or more channels 116 of cascade 106. Hybrid mandrel 420 includes a core 430 and a sleeve 432. Sleeve 432 may be located around and may contact an exterior surface 433 of core 430. Stated differently, core 430 is located in a cavity 434 defined by an interior surface 435 of sleeve 432. The curvature of the external surface 438 of sleeve 432 (i.e., the surface oriented away from interior surface 435) is designed to form cascade channels having complex or other desired curvature. In this regard, the surfaces of a channel 116 formed by hybrid mandrel 420 will mirror external surface 438 of sleeve 432.

In various embodiments, core 430 may include one or more flanges 440. Flanges 440 may extend radially outward from exterior surface 433 of core 430. In this regard, flanges 440 may extend toward external surface 438 of sleeve 432. Interior surface 435 of sleeve 432 may define grooves 442 configured to receive flanges 440. Locating flanges 440 in grooves 442 forms an interference between core 430 and sleeve 432, thereby interlocking core 430 and sleeve 432.

After curing (or otherwise solidifying) the material of cascade 106, a force F may be applied to core 430 to remove hybrid mandrel 420 from between vanes 114. The interference between core 430 and sleeve 432 tends to force sleeve 432 to stretch (e.g., be put under tension), in response to force F and friction forces applied against external surface 438 by vanes 114.

In various embodiments, core 430 may include a tab 436. Tab 436 extends from an upper (or first) surface 437 of core 430. Tab 436 creates an area that allows core 430 to be easily gripped, when removing hybrid mandrel 420 from between vanes 114. In various embodiments, tab 436 defines an orifice 450. Orifice 450 may be configured to receive a hook or other tool, which may be employed to apply force F to core 430.

In various embodiments, core 430 may include a protrusion 446 extending from a lower (or second) surface 448 of core 430. Lower surface 448 may be generally opposite (i.e., oriented away from) upper surface 437, and exterior surface 433 of core 430 be extend from upper surface 437 to lower surface 448. Protrusion 446 may be configured to be located within an opening 452 defined by floor 122 of injection mold 118. Stated differently, opening 452 may be configured to receive protrusion 446. Locating protrusion 446 in opening 452 may help to locate hybrid mandrels 420 in the desired location within mold cavity 124 and/or may reduce or prevent movement of hybrid mandrel 420 during the injection molding process. In various embodiments, core 130, with momentary reference to FIGs. 4A and 4B, may include a protrusion, similar to protrusion 446, opposite tab 136.

In accordance with various embodiments, core 430 may be made of plastic, metal, ceramic, or other suitably hard, rigid material. Sleeve 432 may be made of an elastomer (e.g., rubber, polyurethane, polybutadiene, neoprene, silicone, etc.). The material of sleeve 432 is selected to be flexible enough to allow sleeve 432 to stretch in response to force F being applied to core 430, and also hard enough to resist deformation of external surface 438 during the injection molding process. Stretching, rather than compressing, sleeve 432 decreases the diameter and/or width of hybrid mandrel 420. Decreasing the diameter and/or width of hybrid mandrel 420 tends to reduce the pressure applied to vanes 114 when removing hybrid mandrel 420. Reducing the pressure applied to vanes 114 during removal of hybrid mandrels 420 tends to decrease the risk of damage to vanes 114.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A hybrid mandrel (120) for forming a composite part, comprising:
a core (130) including a rigid material; and
a sleeve (132) located around the core (130), the sleeve (132) comprising an elastomeric material, wherein an external surface (138) of the sleeve (132) is configured to form an interior surface of the composite part.

2. The hybrid mandrel (120) of claim 1, wherein the rigid material of the core (130) comprises:
at least one of a plastic, a metal, a metal alloy, or a ceramic; and/or
a washout material, wherein the washout material optionally comprises at least one of a salt, a composition comprising particles in a soluble binder, or a plaster.

3. The hybrid mandrel (120) of claim 1 or 2, wherein the rigid material of the core (130) has a melting point greater than a melting point of the composite part and less than a melting point of the elastomeric material of the sleeve (132).

4. The hybrid mandrel (120) of claim 1, 2, or 3 wherein a first portion (139) of a first side of an exterior surface (133) of the core (130) is generally parallel to a second portion (139) of a second side of the exterior surface (133) of the core (130), and wherein the first portion (139) of the first side of the exterior surface (133) and the second portion (139) of the second side of the exterior surface (133) are generally parallel to a central axis (A) of the core (130).

5. The hybrid mandrel (120) of any preceding claim, wherein a width (140) of the core (130) as measured at a first end (137) of the hybrid mandrel (120) is greater than a width (142) of the core (130) as measured at a second end (144) of the hybrid mandrel (120), the second end (144) of the hybrid mandrel (120) being opposite the first end (137) of the hybrid mandrel (120).

6. The hybrid mandrel (120) of any preceding claim, further comprising a cap (340) located in an orifice (345) defined by the sleeve (132), wherein a thickness (350) of the sleeve (132), as measured between the cap (340) and the external surface (138) of the sleeve, is generally uniform about a perimeter (337) of the cap (340).

7. The hybrid mandrel (120) of any preceding claim, wherein the composite part comprises at least one of a thrust reverser cascade, a wingbox, an aircraft door, or a flight control surface component.

8. A system (115) for forming a cascade array (106) for a thrust reverser, the system comprising:
an injection mold (118); and
a hybrid mandrel (120) located within a mold cavity (124) of the injection mold (118), the hybrid mandrel (120) comprising:
a core (130); and
a sleeve (132) located around the core (130), the sleeve (132) comprising an elastomeric material.

9. The system (115) of claim 8, wherein the core (130) comprises:
at least one of a plastic, a metal, a metal alloy, or a ceramic; and/or
a washout material.

10. The system (115) of claim 8 or 9, wherein the sleeve (132) comprises a generally uniform thickness as measured between an external surface (138) of the sleeve (132) and an interior surface (135) of the sleeve (132), and wherein, optionally, a first side (138a) of the external surface (138) of the sleeve (132) has a concave contour and a second side (138b) of the external surface (138) of the sleeve (132) has a convex contour.

11. The system (115) of claim 8, 9 or 10, wherein an exterior surface (133) of the core (130) is parallel to an or the external surface (138) of the sleeve (132).

12. The system (115) of any of claims 8 to 11, wherein the core (130) includes a flange (440) extending from an or the exterior surface (133) of the core (130), and wherein the flange (440) is located in a groove (442) formed in an or the interior surface (135) of the sleeve (132).

13. A method (300) of forming a composite part, comprising:
depositing a material around a hybrid mandrel (120), the hybrid mandrel (120) including a core (130) and sleeve (132) located around the core (130);
removing the core (130) of the hybrid mandrel (120); and
removing the sleeve (132) from the composite part after removing the core (130).

14. The method (300) of claim 13, wherein removing the core (130) of the hybrid mandrel (120) comprises least one of dissolving the core (130) or melting the core (130).

15. The method (300) of claim 13 or 14, wherein depositing the material around the hybrid mandrel (120) comprises:
locating a fiber reinforced composite material over an exterior surface (138) of the sleeve (132) of the hybrid mandrel (120); and/or
depositing a molten resin around the hybrid mandrel (120).
